# FASCICULE DE BREVET EUROPEEN

(11) **EP 3 083 523 B1**
(45) Date de publication et mention de la délivrance du brevet: **19.02.2020**
(21) Numéro de dépôt: 14812439.9
(22) Date de dépôt: 10.12.2014
(51) Int. Cl.: C04B 35/14, C04B 35/66, F27D 1/16, C04B 35/65, C01B 33/12

(54) **COMPOSITION SILICEUSE ET PROCEDE D'OBTENTION**
KIESELSÄUREZUSAMMENSETZUNG UND VERFAHREN ZUR GEWINNUNG DAVON
SILICEOUS COMPOSITION AND METHOD FOR OBTAINING SAME

(30) Priorité: 19.12.2013 LU 92339
(43) Date de publication de la demande: 26.10.2016
(73) Titulaire: FIB-Services Intellectual S.A., 8399 Windhof (LU)
(72) Inventeur: DI LORETO, Osvaldo, B-7300 Boussu (BE); TIRLOCQ, Jacques, B-7331 Baudour (BE)
(74) Mandataire: Calysta NV
(86) Numéro de dépôt international: PCT/EP2014/077135
(87) Numéro de publication internationale: WO 2015/091129

(56) Documents cités:
- WO-A1-92/19566
- GB-A- 1 225 629
- GB-A- 2 170 191
- US-A- 2 599 236
- US-A- 5 780 114

## Description

La présente invention se rapporte à une composition pulvérulente à base de silice pour soudure céramique, en particulier par projection, et à son procédé d'obtention.

De telles compositions sont bien connues de l'état de la technique, voir par exemple le document WO92/19566 ou encore de GB2170191 ou US2599236.

De nos jours, de telles compositions pulvérulentes à base de silice pour projection de type soudure céramique sont plutôt préparées à partir de grains réfractaires en silice transformée (cristobalite et/ou tridymite), de particules combustibles (Si, Al) et d'éléments d'addition. Les grains réfractaires en silice transformée d'une granulométrie bien définie sont obtenus à partir d'un traitement par broyage ou criblage de pièces réfractaires, comme par exemple des briques, le plus souvent issues d'un déclassement par le producteur de réfractaires.

Malheureusement, un tel traitement engendre la formation de particules fines en forte proportion, qui sont et doivent être écartées, ce qui conduit à un rendement global de l'ordre de 50 à 60% pour la tranche granulométrique désirée. Les fines doivent ensuite être traitées, ce qui représente un coût important (mise en décharge, agglomération).

De plus, la disponibilité d'une telle matière est bien sûr tributaire du stock existant et/ou de la fraction déclassée dans la production normale des pièces réfractaires en silice.

Enfin, la composition pulvérulente obtenue après broyage et coupure granulométrique de ces pièces réfractaires, en particulier déclassées est une fonction de la composition de ces pièces réfractaires. Typiquement, les pièces réfractaires, obtenues à partir de SiO₂ sont soumises à une cuisson qui a pour but de transformer majoritairement la silice variété quartz en une silice composée de cristobalite, de tridymite et de quartz résiduel. Dans le cadre des pièces réfractaires, cette teneur résiduelle en quartz est d'importance mineure car le quartz de la silice des pièces réfractaires continue sa transformation en cristobalite au cours du temps, in situ, après les avoir positionnées. Par exemple, lorsque de telles pièces réfractaires sont utilisées pour une paroi de four, lors du fonctionnement du four, la silice termine sa cuisson jusqu'à obtenir environ 100% de silice transformée sous forme cristobalite et/ou tridymite, leur ratio dépendant de la température de service.

Lors de réparation de parois réfractaires en silice par projection d'un mélange pulvérulent, l'utilisation d'une composition en teneur variable en cristobalite/tridymite reste plus problématique car elle ne permet pas d'une part une reproductibilité des caractéristiques de la soudure et d'autre part une utilisation pour toutes les applications potentielles, comme par exemple dans le cas de la verrerie. L'invention a pour but de pallier les inconvénients de l'état de la technique en procurant un procédé permettant de réduire sérieusement le taux de fines produites et de briser la dépendance vis-à-vis de la fraction de pièces réfractaires déclassées tout en procurant une large gamme d'applications ainsi qu'une stabilité des caractéristiques de la soudure céramique.

Pour résoudre ce problème, il est prévu suivant l'invention une composition, tel qu'indiqué au début, comprenant :
a) de 10 à 90 % en poids par rapport au poids total de la composition d'une phase de particules siliceuses comprenant de la cristobalite à une teneur d'au moins 80 % en poids et de la tridymite résiduelle à une teneur d' au plus 20% en poids, de préférence d'au plus 17% en poids, par rapport au poids total de laphase de particules silicieuses, et
b) de 90 à 10 % en poids par rapport au poids total de la dite composition d'additifs conventionnels formant une phase liante qui comprend au moins un des éléments ou composes suivants : Al, Si, Mg, Ca, Fe, Cr, Zr, les oxydes Al₂O₃, SIO₂, MgO, CaO, Fe₂O₃, Cr₂O₃, ZrO₂, BaO, SrO, les peroxydes CaO₂, MgO₂, BaO₂, SrO₂,
lesdites particules siliceuses présentant une taille moyenne de particules obtenue par tamisage d₅₀ comprise entre 350 et 800 µm, de préférence entre 400 et 500 µm.

La notation dₓ représente un diamètre de particules moyen par tamisage, exprimé en µm, par rapport auquel X % des particules ou grains mesurées sont plus petites.

Comme on peut le constater la composition selon la présente invention présente avant projection une teneur en cristobalite déjà élevée ainsi qu'une granulométrie adéquate pour de bonnes conditions de projection. En conséquence, lorsque des fissures sont réparées à l'aide d'une telle composition, la conversion de la tridymite résiduelle a lieu in situ et la soudure atteint rapidement une conversion presque totale en cristobalite.

Avantageusement, dans la composition selon la présente invention, lesdites particules siliceuses présentent un d_{3 max} de 1100 µm, de préférence de 1000 µm.

La notation d_{X max} représente un diamètre de particules maximal obtenu par tamisage, exprimé en µm, par rapport auquel X % des particules ou grains mesurées sont plus grosses.

Dans une forme de réalisation particulière, dans la composition selon la présente invention, lesdites particules siliceuses présentent un d_{3 min} de 150 µm, de préférence de 200 µm, ce qui conduit à une composition où la teneur en particules fines est très limitée, sans toutefois devoir écarter une fraction fine importante, ce qui diminue de manière significative l'impact environnemental et le coût de traitement de ces fines.

La notation d_{X min} représente un diamètre de particules minimal obtenu par tamisage, exprimé en µm, par rapport auquel X % des particules ou grains mesurées sont plus petites.

De préférence, dans la composition selon la présente invention, lesdites particules siliceuses présentent une teneur en SiO₂ supérieure ou égale à 97%, de préférence, supérieure ou égale à 98%, de manière plus préférentielle supérieure ou égale à 99% en poids, par rapport au poids total de particules siliceuses.

Ainsi la pureté desdites particules siliceuses est très élevée, améliorant la qualité du réfractaire obtenu, en particulier, par soudure céramique.

Avantageusement, selon la présente invention, la composition comprend de 20 à 85 % en poids de phase de particules siliceuses et de 80 à 15 % en poids de phase liante, par rapport au poids total de la composition.

De manière préférentielle, la composition selon la présente invention comprend de 50 à 85 % en poids de phase de particules siliceuses et de 50 à 15 % en poids de phase liante, par rapport au poids total de la composition.

Dans un mode de réalisation préféré de la composition selon l'invention, ladite phase liante comprend au moins un des éléments ou composés choisis dans le groupe constitué de CaO, MgO, xCaO.yMgO où x et y représentent des fractions massiques dont x+y ≤ 100, et comprend au moins MgO, éventuellement à partir de l'oxyde mixte xCaO.yMgO où x et y représentent des fractions massiques dont x+y ≤ 100.

D'autres formes de réalisation de la composition suivant l'invention sont indiquées dans les revendications annexées.

L'invention a aussi pour objet un procédé de préparation d'une composition pulvérulente à base de silice pour soudure céramique, en particulier par projection.

On connait également des procédés de fabrication de cristobalite par traitement thermique de quartz.

Par exemple, le procédé selon FR1008888 ou GB686876 consiste à fondre (à 1700°C) du sable siliceux très pur (99,8 % en poids de silice), en présence d'une quantité catalytique d'un oxyde de métal alcalin ou alcalino-terreux. Le document FR1008888 souligne par ailleurs que cette quantité dépend de l'oxyde mais doit être assez notable pour que la masse de sable fondue cristallise en cristobalite lors de son refroidissement. Cet oxyde joue le rôle d'un catalyseur de dévitrification.

Les procédés décrits dans ces deux documents permettent d'éviter le broyage et donc le triage de la matière première et du produit réfractaire obtenu. En fait, la masse de produit réfractaire obtenue est friable, s'écrase facilement et se transforme en poudre fine, qu'il faut ensuite tamiser pour retenir la tranche granulométrique désirée, ce qui a pour résultat un rendement aléatoire

Le document FR1005233 se rapporte à une version améliorée du procédé de FR1008888 dans laquelle la silice quartzeuse est préalablement tamisée, à une grosseur aussi faible que possible (tamis de 100 mesh = < 150 µm) et ensuite aspergée d'une solution de soude ou de sels alcalins ou alcalino-terreux en concentration catalytique (1% en poids).

Malheureusement, un tel procédé recourt à nouveau à l'utilisation de catalyseurs et ne reste qu'applicable à des particules de quartz de petite taille.

Le document GB485871 se rapporte à une composition réfractaire et focalise sur l'élimination ou la minimalisation du changement de volume de la matière inhérente au processus de transformation du quartz en variétés transformées pour matériau réfractaire, permettant ainsi de travailler à plus basse température.

Malheureusement, ce document recourt à nouveau à l'emploi d'agents de croissance granulaire constitués de sels de métaux alcalins ou alcalino-terreux, en particulier d'halogénure de ces métaux pour pré-transformer la matière première quartzeuse en tridymite et/ou en cristobalite. Celle-ci est ensuite additionnée d'un agent liant pour façonner et cuire des produits réfractaires dans de meilleures conditions.

Les documents EP283933 et EP 451818 se rapportent à un procédé de fabrication de silice agglomérée de type cristobalite. Selon le document EP283933, le procédé comprend
1) une étape d'addition d'au moins un composé d'un métal alcalin (de 5 à 500 ppm) à de la silice amorphe, très fine (micronique, surface BET = 50 m2/g) ;
2) un traitement à une température comprise entre 1000 et 1300°C, de préférence entre 1200 et 1300°C, pour transformer au moins partiellement la silice en cristobalite ; et
3) une étape d'élimination du métal alcalin par chauffage du matériau à des températures supérieures à 1300°C pour former une masse réfractaire agglomérée comprenant de la cristobalite, facilement fractionnable en poudre.

Selon le document EP451818, le procédé, alternatif à celui divulgué dans EP283933, est un procédé dans lequel de la silice amorphe est transformée en cristobalite sans l'utilisation de métaux alcalins mais plutôt en présence de cristobalite (d'au moins 5 % en poids) à une température comprise entre 1400 et 1700°C, cette cristobalite étant élaborée dans une première étape par le procédé décrit dans EP283933.

Le procédé selon la présente invention est caractérisé en ce qu'il comprend les étapes de :
a) préparation d'une phase de particules siliceuses comprenant de la cristobalite à une teneur d'au moins 80 % en poids et de la tridymite résiduelle à une teneur d'au plus 20% en poids, en particulier d'au plus 17% en poids, par rapport au poids total de la phase de particules siliceuses et de
b) mélange de ladite phase de particules siliceuses avec un ou plusieurs additifs conventionnels formant une phase liante pour la soudure céramique, ladite phase liante comprenant au moins un des éléments ou composes suivants : Al, Si, Mg, Ca, Fe, Cr, Zr, les oxydes Al₂O₃, SIO₂, MgO, CaO, Fe₂O₃, Cr₂O₃, ZrO₂, BaO, SrO, les peroxydes CaO₂, MgO₂, BaO₂, SrO₂.
ladite étape de préparation de ladite phase de particules siliceuses comprenant une amenée de particules de sable de quartz de carrière présentant une taille moyenne de particules obtenue par tamisage, d₅₀, comprise entre 350 et 800 µm, de préférence entre 400 et 500 µm, dans un four rotatif atteignant un température comprise entre 1400°C et 1500°C dans une zone appelée la plus chaude et une cuisson pendant une période de temps prédéterminée avec obtention de ladite phase de particules siliceuses.

Dans le procédé selon la présente invention, les particules de sable de quartz sont sélectionnées pour leur grande pureté et leur granulométrie particulière qui permet d'obtenir la phase de particules siliceuses de la granulométrie finale souhaitée, sans devoir nécessairement passer par des étapes de broyage et de coupure granulométrique qui présentent un impact environnemental assez important, que ce soit par l'énergie de broyage nécessaire ou par la génération de fines particules à mettre au rebut.

De plus, il est apparu de manière relativement surprenante que les particules de sable de quartz de carrière sélectionnée gardent leur granulométrie après cuisson, sans donner lieu à des particules fines à traiter ultérieurement et peuvent être utilisées, tel quel dans le mélange pulvérulent pour les applications ultérieures, en particulier de soudure céramique. En outre, le rendement de conversion en cristobalite est amélioré, aussi par le choix particulier de la qualité et de la granulométrie des particules de sable de quartz de carrière.

En conséquence, le procédé selon la présente invention présente de multiples avantages : d'une part, il permet de briser la dépendance vis-à-vis de l'approvisionnement de la fraction déclassée des pièces réfractaires et de maintenir la qualité des particules siliceuses, après choix du gisement de sable de quartz de carrière et, d'autre part,, il permet d'obtenir un rendement très élevé de la transformation du quartz en cristobalite, tout en préservant la granulométrie souhaitée et en n'engendrant que de très faibles pertes de matières. Il assure en outre une grande reproductibilité des caractéristiques du sable transformé et à fortiori du mélange pour soudure céramique. Enfin, il améliore les performances et la fiabilité du matériau obtenu par soudure céramique. En effet, lors d'une projection par soudure céramique, il est important de maîtriser la distribution granulométrique du mélange pulvérulent, car elle influence le débit massique dudit mélange projeté vers la paroi réfractaire à réparer.

Ceci revêt une grande importance pour garantir une énergie cinétique reproductible aux particules qui impactent la paroi réfractaire. Cette énergie cinétique des particules peut par exemple être caractérisée et ajustée par des mesures acoustiques réalisées durant le transport du mélange gaz propulseur - composition pulvérulente pour soudure céramique afin d'éviter des problèmes de ségrégation de ladite composition pulvérulente durant son transport pneumatique (tuyau + lance de projection) et a fortiori durant son trajet vers la paroi réfractaire à réparer. Une caractérisation optique en sortie de lance par une caméra à grande vitesse d'obturation est un moyen complémentaire. »

Avantageusement, lesdites particules de sable de quartz de carrière présentent un d_{5 min} de 150 µm, de préférence de 200 µm, permettant dès le départ, par le choix de la fraction granulométrique des particules de sable de quartz de carrière, de limiter le taux de fines entrant dans le procédé.

De préférence, lesdites particules de sable de quartz de carrière présentent avant cuisson, une teneur en SiO₂ supérieure ou égale à 97%, de préférence, supérieure ou égale à 98%, de manière plus préférentielle supérieure ou égale à 99% en poids, par rapport au poids total de particules de sable de quartz de carrière, les particules de sable de quartz de carrière étant choisies en outre pour leur grande pureté.

Avantageusement, dans le procédé selon la présente invention, la zone appelée la plus chaude présente une température supérieure ou égale à 1430°C, de manière plus préférentielle supérieure ou égale à 1450°C. Ceci permet de favoriser la phase cristobalite, laquelle est stable à partir de 1450°C au détriment de la tridymite.

Avantageusement, lesdites particules siliceuses présentent un d_{3 max} de 1100 µm, de préférence de 1000 µm. En effet, après cuisson, il n'y a pas de frittage ou d'agglomération observée. Les particules présentent la granulométrie généralement souhaitée pour la projection à savoir la quasi-absence de particules présentant une taille de particules supérieure à 1000 µm.

De manière tout aussi avantageuse, lesdites particules siliceuses présentent un d_{3 min} de 150 µm, de préférence de 200 µm. Les particules siliceuses (donc après cuisson) ne contiennent typiquement pas ou peu de fines particules à mettre ultérieurement au rebut.

Dans une forme de réalisation préférentielle, lesdites particules siliceuses présentent une teneur en SiO₂ supérieure ou égale à 97%, de préférence, supérieure ou égale à 98%, de manière plus préférentielle supérieure ou égale à 99% en poids, par rapport au poids total de particules siliceuses, ce qui représente une pureté très élevée permettant un large panel d'applications.

Dans un mode de réalisation particulièrement préférentiel, ladite phase de particules siliceuses comprend au moins 80 % en poids de cristobalite et au plus 15% en poids de tridymite, par rapport au poids total de la composition de la phase siliceuse. Dans ces particules siliceuses, la teneur en cristobalite est d'ailleurs avantageusement supérieure à 96%, de préférence supérieure à 97%, de manière plus préférentielle, supérieure à 98% et de manière encore plus avantageuse, supérieure ou égale à 99% en poids, par rapport au poids total de particules siliceuses

Avantageusement, dans le procédé selon la présente invention, lors de ladite étape de mélange, de 20 à 85 % en poids de phase de particules siliceuses et de 80 à 15 % en poids de phase liante, par rapport au poids total de la composition, sont amenées dans une cuve de mélange.

Préférentiellement, dans le procédé selon l'invention, lors de ladite étape de mélange, de 50 à 85 % en poids de phase de particules siliceuses et de 50 à 15 % en poids de phase liante, par rapport au poids total de la composition, sont amenées dans une cuve de mélange.

Dans une autre forme de réalisation préférée du procédé selon la présente invention, ladite phase liante comprend au moins un des éléments ou composés choisi dans le groupe constitué de CaO, MgO, xCaO.yMgO où x et y représente des fractions massique dont x+y ≤ 100, et comprend de préférence au moins MgO, éventuellement à partir de l'oxyde mixte xCaO.yMgO où x et y représente des fractions massique dont x+y ≤ 100.

D'autres formes de réalisation du procédé suivant l'invention sont indiquées dans les revendications annexées.

D'autres caractéristiques, détails et avantages de l'invention ressortiront de la description donnée ci-après, à titre non limitatif et en faisant référence aux exemples.

### Exemple 1.-

Un sable de quartz de carrière est sélectionné pour sa pureté chimique (SiO2>99 %) et sa granulométrie convenant pour son application dans un mélange pour soudure céramique (> 1000 µm < 5 % : d₅₀ entre 400 et 600 µm et <200 µm < 5 %).

Il est introduit en alimentation continue dans un four rotatif industriel atteignant 1500 °C dans sa zone la plus chaude, où il séjourne 2 à 3 heures. Après refroidissement, il est analysé sur un plan minéralogique (diffraction RX) et granulométrique (par tamisage).

### Résultats (sur échantillon moyen résultant de plusieurs prélèvements)

Minéralogie : cristobalite = 89 % ; tridymite = 10 % ; quartz résiduel = 1 % ; Granulométrie : > 1000 µm = 1-2 % ; d₅₀ = 400-500 µm ; <200 µm = 1-3 %

La transformation du quartz est donc bien totale (Q résiduel = 1%), elle conduit à un produit constitué en grande majorité de cristobalite avec une teneur mineure en tridymite (= 10%) ; sa granulométrie après transformation est pratiquement semblable à celle avant traitement thermique, sans génération significatives de fines à écarter.

Après addition à cette silice transformée par le procédé des autres ingrédients qui complètent le mélange pour soudure céramique (15% de silicium métal en poudre + 3% de chaux vive), un test de soudure céramique en four pilote est réalisé ; la masse céramique obtenue est caractérisée : densité apparente = 2.2g/cm3 ; porosité ouverte = 6 vol % ; résistance mécanique en compression (écrasement d'un cylindre) = 80 MPa. Ces caractéristiques sont bien supérieures à celle d'une brique de silice conventionnelle (porosité = 18-22 vol % ; R. compression = 30-40 MPa).

De plus, de façon inattendue, la masse ainsi obtenue par soudure céramique présente une dilatation thermique nettement moins élevée (ΔL/L = 0,6 % linéaire à 1000°C) par rapport à celle d'une brique de silice classique (ΔL/L = 1,2 % linéaire à 1000°C). En effet, l'analyse minéralogique révèle une forte proportion de silice vitreuse (fraction amorphe = 60%) et une teneur en cristobalite diminuée (cristobalite = 15%).

Cet abaissement du coefficient de dilatation thermique confère à cette masse céramique une meilleure tenue aux chocs thermiques, utile par exemple dans une zone proche de la porte d'une chambre de four à coke.

Une étape de recuisson à température élevée (5 jours à 1200°C) a permis une recristallisation de cette fraction amorphe en cristobalite, ce qui renforce la tenue à haute température et est favorable à une longue durée de vie en service. En effet, sous l'effet de cette recuisson, les valeurs mesurées par affaissement sous charge (refractoriness-under-load) passent de T0,5 = 1490 à T0,5 = 1530 °C.

### Exemple 2

L'effet d'une diminution de la teneur en cristobalite issue du procédé est illustré en réalisant le mélange suivant : 3/4 de silice transformée en cristobalite issue du procédé et 1/4 de silice transformée issue de briques rebroyées, les autres ingrédients (Si + CaO) étant tel que dans l'exemple 1.

La masse céramique obtenue par soudure céramique présente une dilatation thermique plus élevée (ΔL/L = 1,0 % linéaire à 1000°C), proche de celle d'une brique de silice classique (ΔL/L = 1,2 % linéaire à 1000°C). Cela est dû à la teneur en fraction amorphe qui n'atteint plus que 30% au lieu de 60% (Exemple 1), la teneur en cristobalite remontant de 15 à 45%.

Comme dans l'exemple 1, l'étape de recuisson (5 jours à 1200°C) a permis une recristallisation complète (fraction amorphe nulle et teneur en cristobalite remontée à 65%), ce qui renforce la tenue à haute température.

### Exemple 3

A partir de la même préparation de silice transformée thermiquement en cristobalite, on a réalisé un mélange pour soudure céramique, dans lequel on a substitué la chaux vive CaO par de la magnésie MgO. La masse céramique ainsi obtenue par soudure céramique a été caractérisée : sa dilatation thermique est devenue extrêmement faible (ΔL/L = 0,05% linéaire à 1000°C) grâce à une augmentation de sa teneur en fraction amorphe (70%), révélée par l'analyse minéralogique.

Cette dilatation thermique quasi nulle confère à la masse céramique ainsi obtenue une excellente tenue aux chocs thermiques.

Comme dans les exemples 1 et 2, une étape de recuisson de 5 jours à 1200°C a confirmé que cette fraction amorphe est capable de se recristalliser en cristobalite, si la température de service dépasse les 1100°C, ce qui est le cas au cœur d'une chambre de four à coke.

### Exemple 4

Comme dans l'exemple 2, la silice transformée thermiquement par le procédé peut également être utilisée en mélange avec de la silice issue d'une opération classique de broyage-tamisage de briques réfractaires de silice (cristobalite + tridymite).

A cet effet, le mélange pour soudure céramique est cette fois constitué de 3/4 de silice transformée issue du procédé et de 1/4 de silice rebroyée, les autres ingrédients (Si et MgO) étant tel que dans l'Exemple 3.

La masse céramique obtenue par soudure céramique présente les caractéristiques mentionnées dans le tableau.

**Tableau.-**

| Caractéristiques | Après projection | Après recuisson (1200°C/5j) |
|---|---|---|
| Densité apparente (g/cm³) (mesurée selon la norme EN993-1) | 2,17 | 2,22 |
| Porosité ouverte (vol%) (mesurée selon la norme EN993-1) | 5 | 6 |
| Résistance à l'écrasement à froid (MPa) (mesurée selon la norme EN993-5) | 100 | 150 |
| Résistance à l'abrasion (projection de SiC selon la norme ASTM C704) - Perte de volume (cm³) | -11 | -9 |
| Dilatation à 1000 °C ΔL/L (lin%) | +0,2 | +1,2 |
| Affaissement sous charge T0,5 (°C) (mesurée selon la norme ISO1893) | 1450 | 1610 |

| Minéralogie (phases principales) | | |
|---|---|---|
| Cristobalite | 15 | 55 |
| tridymite | 5 | 15 |
| phase amorphe | 60 | nulle |

Par rapport à l'exemple 2 (passage de CaO à MgO), l'abaissement de la dilatation thermique (de 1,0 à 0,2 % linéaire à 1000°C), favorable à la tenue aux chocs thermiques, est à souligner. Cela est dû à la teneur élevée en phase amorphe (60%).

Grâce à la recristallisation par recuisson, on observe un renforcement des caractéristiques thermiques et mécaniques, ce qui devrait se traduire par un allongement de la durée de vie en service, par exemple en four à coke.

Il est bien entendu que la présente invention n'est en aucune façon limitée aux formes de réalisations décrites ci-dessus et que bien des modifications peuvent y être apportées sans sortir du cadre des revendications annexées.

## Revendications

1. Composition pulvérulente à base de silice pour soudure céramique, en particulier par projection, comprenant
a) de 10 à 90 % en poids par rapport au poids total de la composition d'une phase de particules siliceuses comprenant de la cristobalite à une teneur d'au moins 80 % en poids et de la tridymite résiduelle à une teneur d'au plus 20% en poids, de préférence d'au plus 17% en poids, par rapport au poids total de la phase de particules siliceuses,
b) de 90 à 10 % en poids par rapport au poids total de ladite composition d'additifs conventionnels formant une phase liante qui comprend au moins un des éléments ou composés suivants : Al, Si, Mg, Ca, Fe, Cr, Zr, les oxydes Al₂O₃, SiO₂, MgO, CaO, Fe₂O₃, Cr₂O₃, ZrO₂, BaO, SrO, les peroxydes CaO₂, MgO₂, BaO₂, SrO₂., et,
lesdites particules siliceuses présentant une taille moyenne de particules obtenues par tamisage d₅₀ comprise entre 350 et 800 µm, de préférence entre 400 et 500 µm.

2. Composition selon la revendication 1, dans laquelle lesdites particules siliceuses présentent un d_{3 max} de 1100 µm, de préférence de 1000 µm, d_{3 max} étant un diamètre de particules maximal obtenu par tamisage par rapport auquel 3% des particules mesurées sont plus grosses.

3. Composition selon la revendication 1 ou la revendication 2, dans laquelle lesdites particules siliceuses présentent un d_{3 min} de 150 µm, de préférence de 200 µm, d_{3 min} étant un diamètre de particules minimal obtenu par tamisage par rapport auquel 3% des particules sont plus petites.

4. Composition selon l'une quelconque des revendications précédentes, dans laquelle lesdites particules siliceuses présentent une teneur en SiO₂ supérieure ou égale à 97%, de préférence, supérieure ou égale à 98%, de manière plus préférentielle supérieure ou égale à 99% en poids, par rapport au poids total de particules siliceuses.

5. Composition selon l'une quelconque des revendications précédentes, comprenant de 20 à 85 % en poids de phase de particules siliceuses et de 80 à 15 % en poids de phase liante, par rapport au poids total de la composition.

6. Composition selon l'une quelconque des revendications précédentes, comprenant de 50 à 85% en poids de phase de particules siliceuses et de 50 à 15% en poids de phase liante, par rapport au poids total de la composition.

7. Composition selon l'une des revendications 1 à 6, dans laquelle ladite phase liante comprend au moins un des éléments ou composés choisis dans le groupe constitué de CaO, MgO, xCaO.yMgO où x et y représentent des fractions massiques dont x+y ≤ 100.

8. Composition selon l'une des revendications 1 à 7, dans laquelle ladite phase liante comprend au moins MgO, éventuellement à partir de l'oxyde mixte xCaO.yMgO où x et y représentent des fractions massiques dont x+y ≤ 100.

9. Procédé de préparation d'une composition pulvérulente à base de silice pour soudure céramique, en particulier par projection, comprenant les étapes de :
a) préparation d'une phase de particules siliceuses comprenant de la cristobalite à une teneur d'au moins 80 % en poids et de la tridymite résiduelle à une teneur d'au plus 20 % en poids, en particulier d'au plus 17% en poids, , par rapport au poids total de la phase de particules siliceuses, et de
b) mélange de ladite phase de particules siliceuses avec un ou plusieurs additifs conventionnels formant une phase liante en soudure céramique, ladite phase liante comprenant au moins un des éléments ou composés suivants : Al, Si, Mg, Ca, Fe, Cr, Zr, les oxydes Al₂O₃, SiO₂, MgO, CaO, Fe₂O₃, Cr₂O₃, ZrO₂, BaO, SrO, les peroxydes CaO₂, MgO₂, BaO₂, SrO₂.,
ladite étape de préparation de ladite phase de particules siliceuses comprenant une amenée de particules de sable de quartz de carrière présentant une taille moyenne de particules obtenue par tamisage d₅₀ comprise entre 350 et 800 µm, de préférence entre 400 et 500 µm, dans un four rotatif atteignant de 1400°C à 1500°C dans une zone appelée la plus chaude et une cuisson pendant une période de temps prédéterminée avec obtention de ladite phase de particules siliceuses.

10. Procédé de préparation selon la revendication 9, dans lequel les dites particules de sable de quartz de carrière présentent un d_{5 max} de 1100 µm, de préférence de 1000 µm, d₅ₘₐₓ étant un diamètre de particules maximal obtenu par tamisage par rapport auquel 5% des particules mesurées sont plus grosses.

11. Procédé de préparation selon la revendication 9 ou la revendication 10, dans lequel lesdites particules de sable de quartz de carrière présentent un d_{5 min} de 150 µm, de préférence de 200 µm, d_{5 min} étant un diamètre de particules minimal obtenu par tamisage par rapport auquel 5% des particules mesurées sont plus petites.

12. Procédé de préparation selon l'une quelconque des revendications 9 à 11, dans lequel lesdites particules de sable de quartz de carrière présentent avant cuisson, une teneur en SiO₂ supérieure ou égale à 97%, de préférence, supérieure ou égale à 98%, de manière plus préférentielle supérieure ou égale à 99% en poids, par rapport au poids total de particules de sable de quartz de carrière.

13. Procédé de préparation selon l'une quelconque des revendications 9 à 12, dans lequel la zone appelée la plus chaude présente une température supérieure ou égale à 1430°C, de manière plus préférentielle supérieure ou égale à 1450°C.

14. Procédé de préparation selon l'une quelconque des revendications 9 à 13, dans lequel lesdites particules siliceuses présentent un d_{3 max} de 1100 µm, de préférence de 1000 µm, d₃ₘₐₓ étant un diamètre de particules obtenu par tamisage par rapport auquel 3% des particules mesurées sont plus grosses.

15. Procédé de préparation selon l'une quelconque des revendications 9 à 14, dans lequel lesdites particules siliceuses présentent un d_{3 min} de 150 µm, de préférence de 200 µm d₃ₘᵢₙ étant un diamètre de particules obtenu par tamisage par rapport auquel 3% des particules mesurées sont plus petites.

16. Procédé de préparation selon l'une quelconque des revendications 9 à 15, dans lequel lesdites particules siliceuses présentent une teneur en SiO₂ supérieure ou égale à 97%, de préférence, supérieure ou égale à 98%, de manière plus préférentielle supérieure ou égale à 99% en poids, par rapport au poids total de particules siliceuses.

17. Procédé de préparation selon l'une quelconque des revendications 9 à 16, dans lequel ladite phase de particules siliceuses comprend au moins 80 % en poids de cristobalite et au plus 15% en poids de tridymite, par rapport au poids total de la phase de particules siliceuses.

18. Procédé de préparation selon l'une quelconque des revendications 9 à 17, dans lequel lors de ladite étape de mélange, de 20 à 85 % en poids de phase de particules siliceuses et de 80 à 15 % en poids de phase liante, par rapport au poids total de la composition, sont amenés dans une cuve de mélange.

19. Procédé de préparation selon l'une quelconque des revendications 9 à 18, dans lequel lors de ladite étape de mélange, de 50 à 85 % en poids de phase de particules siliceuses et de 50 à 15 % en poids de phase liante, par rapport au poids total de la composition, sont amenés dans une cuve de mélange.

20. Procédé de préparation selon l'une des revendications 9 à 19, dans lequel ladite phase liante comprend au moins un des éléments ou composés choisis dans le groupe constitué de CaO, MgO, xCaO.yMgO où x et y représentent des fractions massiques dont x+y ≤ 100.

21. Procédé de préparation selon l'une des revendications 9 à 20, dans lequel ladite phase liante comprend au moins MgO, éventuellement à partir de l'oxyde mixte xCaO.yMgO où x et y représentent des fractions massiques dont x+y ≤ 100.

## Patentansprüche

1. Pulverförmige Zusammensetzung auf Basis von Kieselsäure für keramische Schweißung, insbesondere durch Projektion, umfassend
a) von 10 bis 90 Gew.-% in Bezug auf das Gesamtgewicht der Zusammensetzung einer Kieselsäurepartikelphase, umfassend Cristobalit zu einem Gehalt von mindestsens 80 Gew.-% und Resttridymit zu einem Gehalt von höchstens 20 Gew.-%, bevorzugt höchstens 17 Gew.-%, in Bezug auf das Gesamtgewicht der Kieselsäurepartikelphase,
b) von 90 bis 10 Gew.-% in Bezug auf das Gesamtgewicht der Zusammensetzung herkömmlicher Zusatzstoffe, die eine Bindephase bilden, die mindestens eines der folgenden Elemente oder Verbindungen umfasst: Al, Si, Mg, Ca, Fe, Cr, Zr, die Oxide Al₂O₃, SiO₂, MgO, CaO, Fe₂O₃, Cr₂O₃, ZrO₂, BaO, SrO, die Peroxide CaO₂, MgO₂, BaO₂, SrO₂ und
wobei die Kieselsäurepartikeln eine Durchschnittsgröße d₅₀ von durch Siebung erhaltenen Partikeln zwischen 350 und 800 µm, bevorzugt zwischen 400 und 500 µm, aufweisen.

2. Zusammensetzung nach Anspruch 1, wobei die Kieselsäurepartikeln einen d_{3 max} von 1100 µm, bevorzugt von 1000 µm, aufweisen, wobei d_{3 max} ein durch Siebung erhaltener Partikelhöchstdurchmesser ist, in Bezug auf den 3% der gemessenen Partikeln größer sind.

3. Zusammensetzung nach Anspruch 1 oder Anspruch 2, wobei die Kieselsäurepartikeln einen d_{3 min} von 150 µm, bevorzugt von 200 µm, aufweisen, wobei d_{3 min} ein durch Siebung erhaltener Partikelmindestdurchmesser ist, in Bezug auf den 3% der gemessenen Partikeln kleiner sind.

4. Zusammensetzung nach einem der vorstehenden Ansprüche, wobei die Kieselsäurepartikeln einen SiO₂-Gehalt größer oder gleich 97 Gew.-%, bevorzugt größer oder gleich 98 Gew.-%, bevorzugter größer oder gleich 99 Gew.-% aufweisen, in Bezug auf das Gesamtgewicht von Kieselsäurepartikeln.

5. Zusammensetzung nach einem der vorstehenden Ansprüche, umfassend von 20 bis 85 Gew.-% Kieselsäurepartikelphase und von 80 bis 15 Gew.-% Bindephase, in Bezug auf das Gesamtgewicht der Zusammensetzung.

6. Zusammensetzung nach einem der vorstehenden Ansprüche, umfassend von 50 bis 85 Gew.-% Kieselsäurepartikelphase und von 50 bis 15 Gew.-% Bindephase, in Bezug auf das Gesamtgewicht der Zusammensetzung.

7. Zusammensetzung nach einem der Ansprüche 1 bis 6, wobei die Bindephase mindestens eines der Elemente oder Verbindungen umfasst, die ausgewählt sind aus der Gruppe bestehend aus CaO, MgO, xCaO.yMgO, wo x und y Massenanteile darstellen, bei denen x + y ≤ 100.

8. Zusammensetzung nach einem der Ansprüche 1 bis 7, wobei die Bindephase mindestens MgO umfasst, eventuell ausgehend vom Mischoxid xCaO.yMgO, wo x und y Massenanteile darstellen, bei denen x + y ≤ 100.

9. Herstellungsverfahren einer pulverförmigen Zusammensetzung auf Basis von Kieselsäure für keramische Schweißung, insbesondere durch Projektion, umfassend die Schritte des:
a) Herstellens einer Kieselsäurepartikelphase, umfassend Cristobalit zu einem Gehalt von mindestens 80 Gew.-% und Resttridymit zu einem Gehalt von höchstens 20 Gew.-%, insbesondere höchstens 17 Gew.-%, in Bezug auf das Gesamtgewicht der Kieselsäurepartikelphase, und des
b) Mischens der Kieselsäurepartikelphase mit einem oder mehreren herkömmlichen Zusatzstoffen, die eine Bindephase bei keramischer Schweißung bilden, wobei die Bindephase mindestens eines der folgenden Elemente oder Verbindungen umfasst: Al, Si, Mg, Ca, Fe, Cr, Zr, die Oxide Al₂O₃, SiO₂, MgO, CaO, Fe₂O₃, Cr₂O₃, ZrO₂, BaO, SrO, die Peroxide CaO₂, MgO₂, BaO₂, SrO₂,
wobei der Schritt des Herstellens der Kieselsäurepartikelphase ein Leiten von Steinbruchquarzsandpartikeln, die eine durch Siebung erhaltene Partikeldurchschnittsgröße d₅₀ zwischen 350 und 800 µm, bevorzugt zwischen 400 und 500 µm, aufweisen, in einen Drehofen, der in einem als den heißesten bezeichneten Bereich von 1400 °C bis 1500 °C erreicht, und ein Brennen während einer vorbestimmten Zeitdauer mit Erhalten der Kieselsäurepartikelphase umfasst.

10. Herstellungsverfahren nach Anspruch 9, wobei die Steinbruchquarzsandpartikeln einen d_{5 max} von 1100 µm, bevorzugt von 1000 µm, aufweisen, wobei d_{5 max} ein durch Siebung erhaltener Partikelhöchstdurchmesser ist, in Bezug auf den 5 % der gemessenen Partikeln größer sind.

11. Herstellungsverfahren nach Anspruch 9 oder Anspruch 10, wobei die Steinbruchquarzsandpartikeln einen d_{5 min} von 150 µm, bevorzugt von 200 µm, aufweisen, wobei d_{5 min} ein durch Siebung erhaltener Partikelmindestdurchmesser ist, in Bezug auf den 5 % der gemessenen Partikeln kleiner sind.

12. Herstellungsverfahren nach einem der Ansprüche 9 bis 11, wobei die Steinbruchquarzsandpartikeln vor einem Brennen einen SiO₂-Gehalt größer oder gleich 97 Gew.-%, bevorzugt größer oder gleich 98 Gew.-%, bevorzugter größer oder gleich 99 Gew.-% aufweisen, in Bezug auf das Gesamtgewicht von Steinbruchquarzsandpartikeln.

13. Herstellungsverfahren nach einem der Ansprüche 9 bis 12, wobei der als der heißeste bezeichnete Bereich eine Temperatur höher oder gleich 1430 °C, bevorzugter höher oder gleich 1450 °C aufweist.

14. Herstellungsverfahren nach einem der Ansprüche 9 bis 13, wobei die Kieselsäurepartikeln einen d_{3 max} von 1100 µm, bevorzugt von 1000 µm, aufweisen, wobei d_{3 max} ein durch Siebung erhaltener Partikeldurchmesser ist, in Bezug auf den 3% der gemessenen Partikeln größer sind.

15. Herstellungsverfahren nach einem der Ansprüche 9 bis 14, wobei die Kieselsäurepartikeln einen d_{3 min} von 150 µm, bevorzugt von 200 µm, aufweisen, wobei d_{3 min} ein durch Siebung erhaltener Partikeldurchmesser ist, in Bezug auf den 3% der gemessenen Partikeln kleiner sind.

16. Herstellungsverfahren nach einem der Ansprüche 9 bis 15, wobei die Kieselsäurepartikeln einen SiO₂-Gehalt größer oder gleich 97 Gew.-%, bevorzugt größer oder gleich 98 Gew.-%, bevorzugter größer oder gleich 99 Gew.-% aufweisen, in Bezug auf das Gesamtgewicht von Kieselsäurepartikeln.

17. Herstellungsverfahren nach einem der Ansprüche 9 bis 16, wobei die Kieselsäurepartikelphase mindestsens 80 Gew.-% Cristobalit und höchstens 15 Gew.-%, Tridymit umfasst, in Bezug auf das Gesamtgewicht der Kieselsäurepartikelphase.

18. Herstellungsverfahren nach einem der Ansprüche 9 bis 17, wobei beim Schritt des Mischens von 20 bis 85 Gew.-% Kieselsäurepartikelphase und von 80 bis 15 Gew.-% Bindephase, in Bezug auf das Gesamtgewicht der Zusammensetzung, in einen Mischbehälter geleitet werden.

19. Herstellungsverfahren nach einem der Ansprüche 9 bis 18, wobei beim Schritt des Mischens von 50 bis 85 Gew.-% Kieselsäurepartikelphase und von 50 bis 15 Gew.-% Bindephase, in Bezug auf das Gesamtgewicht der Zusammensetzung, in einen Mischbehälter geleitet werden.

20. Herstellungsverfahren nach einem der Ansprüche 9 bis 19, wobei die Bindephase mindestens eines der Elemente oder Verbindungen umfasst, die ausgewählt sind aus der Gruppe bestehend aus CaO, MgO, xCaO.yMgO, wo x und y Massenanteile darstellen, bei denen x + y ≤ 100.

21. Herstellungsverfahren nach einem der Ansprüche 9 bis 20, wobei die Bindephase mindestens MgO umfasst, eventuell ausgehend vom Mischoxid xCaO.yMgO, wo x und y Massenanteile darstellen, bei denen x + y ≤ 100.

## Claims

1. A powdery composition based on silica for ceramic welding, comprising
(a) from 10% to 90% of a phase of siliceous particles based on the total weight of the composition comprising at least 80% by weight of cristobalite and at most 20% by weight, preferably at most 17% by weight of residual tridymite based on the total weight of the composition; and
(b) from 90% to 10% by weight based on the total weight of the composition of conventional additives forming a binding phase, which comprises at least one of the following elements or compounds: Al, Si, Mg, Ca, Fe, Cr, Zr, oxide Al₂O₃, SiO₂, MgO, CaO, Fe₂O₃, Cr₂O₃, ZrO₂, BaO, SrO, peroxides CaO₂, MgO₂, BaO₂, and SrO₂, and
said siliceous particles having an average particle size by sifting d₅₀ comprised between 350 and 800 µm, preferably between 400 and 500 µm.

2. The composition according to claim 1, wherein said siliceous particles have a d_{3 max} of 1100 µm, preferably of 1000 µm, d_{3 max} represents a maximum particle diameter obtained by sifting relatively to which 3 % of the measured particles are bigger

3. The composition according to claim 1 or according to claim 2, wherein said siliceous particles have a d_{3 min} of 150 µm, preferably of 200 µm, d_{3 min} represents a minimum particle diameter obtained by sifting relatively to which 3 % of the measured particles or grains are smaller.

4. The composition according to any of the claims, wherein said siliceous particles have an SiO₂ content greater than or equal to 97% by weight, preferably greater than or equal to 98 %, more preferably greater than or equal to 99 % by weight, based on the total weight of siliceous particles.

5. The composition according to any of the claims, comprising from 20 to 85% by weight of phase of siliceous particles and from 80 to 15% by weight of binding phase, based on the total weight of the composition.

6. The composition according to claim 1, comprising from 50 to 85% by weight of phase of siliceous particles and from 50 to 15% by weight of binding phase, based on the total weight of the composition.

7. The composition according to any of the claims 1 to 6, wherein said binding phase comprises at least one of the elements or compounds selected from the group consisting of CaO, MgO, and xCaO.yMgO, wherein x and y represent mass fractions for which x+y ≤ 100.

8. The composition according to any of the claims 1 to 7, wherein said binding phase comprises at least MgO, potentially starting from the mixed oxide xCaO.yMgO wherein x and y represent mass fractions for which x+y ≤ 100.

9. A method for preparing a powdery composition based on silica for ceramic welding, in particular by projection, comprising the steps:
(a) preparing a phase of siliceous particles comprising at least 80% by weight of cristobalite and at most 20% by weight, in particular at most 17 % by weight of residual tridymite, based on the total weight of the phase of siliceous particles; and
(b) mixing said phase of siliceous particles with one or more conventional additives forming a binding phase in ceramic welding, said binding phase comprising at least one of the following elements or compounds: Al, Si, Mg, Ca, Fe, Cr, Zr, oxide Al₂O₃, SiO₂, MgO, CaO, Fe₂O₃, Cr₂O₃, ZrO₂, BaO, SrO, peroxides CaO₂, MgO₂, BaO₂, and SrO₂
said step for preparing said phase of siliceous particles comprising a supply of the quarry quartz sand particles having a mean particle size obtanined by sifting d₅₀ comprised between 350 and 800 µm, preferably between 400 and 500 µm, in a rotary furnace attaining 1400° C to 1.500°C. in an area called the hottest area and for baking for a predetermined period of time with said phase of siliceous particles being obtained.

10. The preparation method according to claim 9, wherein said quarry quartz sand particles have a d_{5 max} of 1100 µm, preferably of 1000 µm, d_{5 max} representing a maximum particle diameter obtained by sifting relatively to which 5 % of the measured particles are bigger.

11. The preparation method according to claim 9 or claim 10, wherein said quarry quartz sand particles have a d_{5 min} of 150 µm, preferably of 200 µm, d_{5 min} representing a minimum particle diameter obtained by sifting relatively to which 5 % of the measured particles or grains are smaller

12. The preparation method according to any of the claims 9 to 11, wherein said quarry quartz sand particles have before baking an SiO₂ content greater than or equal to 97% by weight, preferably greater than or equal to 98 %, more preferably greater than or equal to 99 % by weight, based on the total weight of siliceous particles.

13. The preparation method according to any of the claims 9 to 12, wherein the area called the hottest area has a temperature greater than or equal to 1,430° C, more preferably greater than or equal to 1450°C.

14. The preparation method according to any of the claims 9 to 13, wherein said siliceous particles have a d_{3 max} of 1,100 µm, preferably of 1000 µm, d3 max represents a maximum particle diameter obtained by sifting relatively to which 3 % of the measured particles are bigger.

15. The preparation method according to any of the claims 9 to 14, wherein said siliceous particles have a d_{3 min} of 150 µm, preferably of 200 µm, d_{3 min} represents a minimum particle diameter obtained by sifting relatively to which 3 % of the measured particles or grains are smaller.

16. The preparation method according to any of the claims 9 to 10, wherein said siliceous particles have an SiO₂ content greater than or equal to 97% by weight, preferably greater than or equal to 98 %, more preferably greater than or equal to 99 % by weight, based on the total weight of siliceous particles.

17. The preparation method according to any of the claims 9 to 16, wherein said phase of siliceous particles comprises at least 80% by weight of cristobalite and at most 15% by weight of tridymite, based on the total weight of siliceous particles.

18. The preparation method according to any of the claims 9 to 17, wherein, during said mixing step, 20 to 85% by weight of phase of siliceous particles and 80 to 15% by weight of binding phase, based on the total weight of the composition, are brought into a mixing tank.

19. The preparation method according to any of the claims 9 to 19, wherein, during said mixing step, 50 to 85% by weight of phase of siliceous particles and 50 to 15% by weight of binding phase, based on the total weight of the composition, are brought into a mixing tank.

20. The preparation method according to any of the claims 9 to 20, wherein said binding phase comprises at least one of the elements or compounds selected from the group consisting of CaO, MgO, and xCaO.yMgO, wherein the x and y represent mass fractions for which x+y≦100.

21. The preparation method according to any of the claims 9 to 20, wherein said binding phase comprises at least MgO, optionally from said oxide mixture, whenre xCaO.yMgO où X et Y represent mass fractions which are such x+y ≤ 100.
